# EUROPÄISCHE PATENTANMELDUNG

(11) **EP 1 376 322 A1**
(43) Veröffentlichungstag der Anmeldung: **02.01.2004**
(21) Anmeldenummer: 02360192.5
(22) Anmeldetag: 27.06.2002
(51) Int. Cl.: G06F 3/033, G06F 9/44

(54) **Verfahren und multimodale Benutzer-Schnittstelle zum Verarbeiten von Benutzereingaben**

(71) Anmelder: ALCATEL, 75008 Paris (FR)
(72) Erfinder: Wajda, Wieslawa, Dipl.-Ing., 75210 Keltern (DE)
(74) Vertreter: Dreiss, Fuhlendorf, Steimle & Becker

(57) **Zusammenfassung**

Die Erfindung betriff ein Verfahren und eine multimodale Benutzer-Schnittstelle (1) zum Verarbeiten von multimodalen Benutzereingaben, die in verschiedenen Eingabemodi innerhalb einer bestimmten von mehreren verschiedenen Anwendungsumgebungen in eine Rechnereinheit eingegeben und dort in unterschiedliche Datenströme (5, 6, 7, 8) umgewandelt werden. Um eine besonders flexible Verarbeitung von multimodalen Benutzereingaben zu ermöglichen, ohne manuell zwischen verschiedenen Eingabemodi umschalten zu müssen, wird vorgeschlagen, dass innerhalb der Datenströme (5, 6, 7, 8) verschiedene Informationskategorien unterschieden werden, abhängig von einem Kontext (14), in dem die Datenströme (5, 6, 7, 8) erzeugt wurden, eine geeignete Verarbeitungsreihenfolge der Informationskategorien innerhalb der einzelnen Datenströme (5, 6, 7, 8) ermittelt wird und die Datenströme (5, 6, 7, 8) in der ermittelten Reihenfolge verarbeitet werden, wobei der Kontext (14) die aktuelle und/oder vergangene Anwendungsumgebungen umfasst.

## Beschreibung

Die vorliegende Erfindung betrifft ein Verfahren zum Verarbeiten von multimodalen Benutzereingaben, die über verschiedene Eingabemittel in verschiedenen Eingabemodi innerhalb einer bestimmten von mehreren verschiedenen Anwendungsumgebungen in eine Rechnereinheit eingegeben und dort in unterschiedliche Datenströme umgewandelt werden.

Die Erfindung betrifft außerdem Multimodale Benutzer-Schnittstelle, welche multimodale Benutzereingaben verarbeitet, die über verschiedene Eingabemittel in verschiedenen Eingabemodi innerhalb einer bestimmten von mehreren verschiedenen Anwendungsumgebungen in eine Rechnereinheit eingebbar und dort in unterschiedliche Datenströme umwandelbar sind,

Schließlich betrifft die vorliegende Erfindung ein Computerprogramm für eine multimodale Benutzer-Schnittstelle, das auf einem Rechengerät, insbesondere auf einem Mikroprozessor, der Schnittstelle ablauffähig ist.

Ein Verfahren und eine Benutzer-Schnittstelle der eingangs genannten Art kann bspw. zur Steuerung von Rechnereinheiten, insbesondere von PCs (Personal Computer), von Mobiltelefonen und insbesondere zur Bedienung von Internet- oder UMTS (Universal Mobile Telecommunications System)-basierten Diensten, eingesetzt werden. Die Benutzer-Schnittstelle empfängt und verarbeitet Benutzereingaben, die von einem Benutzer in einem vorgebbaren Eingabemodus, d. h. unter Verwendung verschiedener verfügbarer Eingabemittel wie bspw. einer Tastatur, einer Maus, eines Trackball, eines Systems zum Erfassen und Auswerten von Handschrifteingaben, eines berührungssensitiver Bildschirm, eines Spracherkennungssystems, eines optischen Systems zum Erfassen und Auswerten von Mimik und Gestik des Benutzers oder Ähnlichem eingegeben werden. In der Rechnereinheit wird ein Datenstrom erzeugt, der abhängig ist von der Art bzw. dem Inhalt der Benutzereingaben und von den verwendeten Eingabemodi.

Die Art der Benutzereingaben kann in verschiedene Informationskategorien unterteilt werden. Gemäß einer groben Unterteilung können die Benutzereingaben bspw. in die Informationskategorien Präsentieren, Selektieren und Ausführen unterteilt werden. Beim Präsentieren werden dem Benutzer optisch, akustisch oder auf andere Weise verschiedene Dienste (Auswahlmöglichkeiten) vorgestellt. Beim Selektieren wird mindestens eine der Auswahlmöglichkeiten ausgewählt und es werden Informationen, insbesondere alphanumerische Zeichen für Texte, eingegeben. Beim Ausführen wird ein bestimmter Dienst, der vorzugsweise zuvor in der Informationskategorie Selektieren ausgewählt und mit Informationen versorgt wurde, gestartet und ausgeführt.

Die Benutzereingaben können innerhalb verschiedener Anwendungsumgebungen einer Rechnereinheit erzeugt werden, wobei gemäß der vorliegenden Erfindung unter dem Begriff "Rechnereinheit" nicht nur sog. PCs (Personal Computer) zu verstehen sind, sondern jegliche Art von elektrischen Geräten, die über ein Rechengerät, insbesondere einen Mikroprozessor, verfügen, und die über Benutzereingaben bedient werden können. So wird unter dem Begriff "Rechnereinheit" im Sinne der vorliegenden Erfindung insbesondere auch ein stationäres oder mobiles Telekommunikationsendgerät verstanden. Unter "Anwendungsumgebung" werden verschiedene Anwendungsprogramme oder Teile davon verstanden, in denen sich der Benutzer während der Benutzereingabe befindet. Bei einem PC wäre bspw. eine Anwendungsumgebung zum Erstellen und Bearbeiten von Textdokumenten (Texteditor oder Textprogramm) oder eine Anwendungsumgebung zum Versenden und Empfangen von elektronischen Nachrichten (e-mail-Programm) denkbar. Bei Telekommunikationsendgeräten wäre bspw. eine Anwendungsumgebung zum Verfassen, Bearbeiten und Empfangen von Kurznachrichten (sog. SMS, Short Message Service) oder eine Anwendungsumgebung zum Nutzen von Telekommunikationsdiensten, insbesondere von WAP (Wireless Application Protocol)-Diensten, denkbar.

Aus der WO 00/08547 ist eine multimodale Benutzer-Schnittstelle der eingangs genannten Art und ein Verfahren zum Verarbeiten von multimodalen Benutzereingaben der eingangs genannten Art bekannt. In dieser Druckschrift wird jedoch weniger auf die Verarbeitungsreihenfolge der Informationskategorien innerhalb der einzelnen Datenströme eingegangen, sondern vielmehr die Art der Verarbeitung der einzelnen Datenströme beschrieben. Es wird insbesondere vorgeschlagen, dass eine virtuelle Maschine (VM) zwei oder mehrere verschiedene Datenströme miteinander korreliert und auf Grundlage des Inhalts der beiden zuletzt verarbeiteten Datenströme einen entsprechenden Befehl für die Rechnereinheit bestimmt. Dieser Befehl wird dann in der Rechnereinheit in einer an sich bekannten Weise interpretiert und ausgeführt.

Aus dem Stand der Technik ist es des Weiteren bekannt, bestimmte Verarbeitungseinheiten (sog. Interpreter) für eine Diensteauswahl oder Diensteausführung vorzusehen. Dabei steuert der Benutzer den Wechsel der Interpreter, insbesondere welcher der Interpreter für bestimmte Eingabemodi aktiv sein soll und unabhängig von den Informationskategorien Befehle interpretieren bzw. ausführen soll, durch ausdrückliche Anweisungen.

Bei den aus dem Stand der Technik bekannten Verfahren zum Verarbeiten von Benutzereingaben und bei den bekannten multimodalen Benutzer-Schnittstellen ist die strikte Abgrenzung zwischen den verschiedenen Eingabemodi zur Verarbeitung der einzelnen Datenströme und die manuelle Vergabe der Interpreter durch den Benutzer von Nachteil. So müssen bspw. Benutzereingaben zur Durchführung eines Dialogs in einem Dialogmodus und Kommandos in einem Kommandomodus interpretiert werden. Eine parallele und flexibel steuerbare Verarbeitung von multimodalen Benutzereingaben ist nach dem Stand der Technik nicht möglich. Insbesondere ist es nicht möglich, die Verarbeitung durch die Rechnereinheit, durch den Benutzer, abhängig von dem Kontext, d. h. von dem Umfeld, in welchem die Benutzereingaben erzeugt wurden, und/oder zeitabhängig vollautomatisch zu steuern.

Der vorliegenden Erfindung liegt deshalb die Aufgabe zugrunde, das Verarbeiten von multimodalen Benutzereingaben dahingehend auszugestalten und weiterzubilden, dass eine multimodale Kommunikation zwischen einem Benutzer einer Rechnereinheit und der Rechnereinheit, insbesondere die Verarbeitung von multimodalen Benutzereingaben, und gleichzeitig ein Maximum an Flexibilität bei der Steuerung der Verarbeitung der Benutzereingaben erzielt werden kann.

Zur Lösung dieser Aufgabe schlägt die vorliegende Erfindung ausgehend von dem Verfahren der eingangs genannten Art vor, dass innerhalb der Datenströme verschiedene Informationskategorien unterschieden werden, eine geeignete Verarbeitungsreihenfolge der Informationskategorien innerhalb der einzelnen Datenströme abhängig von einem Kontext ermittelt wird und die Datenströme in der ermittelten Reihenfolge verarbeitet werden, wobei der Kontext die aktuelle und/oder vergangene Anwendungsumgebungen umfasst. Vorzugsweise wird die Verarbeitungsreihenfolge abhängig von dem Kontext, in dem die Datenströme erzeugt wurden, ermittelt.

Unter "Kontext" im Sinne der vorliegenden Erfindung werden ganz allgemein die Bedingungen verstanden, unter denen die Benutzereingaben erzeugt wurden. Der Kontext kann bspw. aktuelle und/oder vergangene Anwendungsumgebungen umfassen. Der Begriff der Anwendungsumgebung umfasst nicht nur verschiedene Computerprogramme oder Anwendungen, die auf der Rechnereinheit ablaufen, sondern kann beliebig fein untergliedert werden. So ist es bspw. denkbar, innerhalb eines Computerprogrammes jeden einzelnen Menüpunkt einer menügeführt steuerbaren Anwendung als eigene Anwendungsumgebung zu betrachten. Der Kontext kann von der Rechnereinheit oder von einem Benutzer vorgegeben werden oder zeitabhängig sein.

Erfindungsgemäß werden zunächst abhängig von dem Kontext, in dem die Datenströme erzeugt wurden, bestimmte Eingabemodi (z.B. Eingabe der Benutzereingaben über eine Tastatur, eine Maus, Spracheingabe, Videoeingabe etc.) bestimmten Befehlekategorien (z. B. Selektieren, Eingeben, Ausführen etc.) zugeordnet. Diese Zuordnung erfolgt in Abhängigkeit von dem Kontext, in dem die Datenströme erzeugt wurden. Auf diese Weise wird den verschiedenen Eingabemodi eines Datenstroms kontextabhängig jeweils mindestens eine Informationskategorie zugeordnet. Für jede der Informationskategorien ist eine eigene Verarbeitungseinheit (sog. Interpreter) vorgesehen. Die Informationskategorien sind den einzelnen Eingabemodi in einer bestimmten Reihenfolge zugeordnet. In dieser Verarbeitungsreihenfolge erfolgt dann die Verarbeitung der einzelnen Datenströme. Das bedeutet bspw., dass in einer Anwendungsumgebung zum Erstellen und Bearbeiten von Textdokumenten die Datenströme in einer anderen Reihenfolge verarbeitet werden als bspw. in einer Anwendungsumgebung zum Versenden und Empfangen von elektronischen Nachrichten.

In einem Datenstrom sind Benutzereingaben in verschiedenen Eingabemodi enthalten. In einem ersten Kontext wird der Datenstrom, der durch einen bestimmten Eingabemodus erzeugt wurde, zunächst als einer bestimmten Informationskategorie zugehörig betrachtet. Aus diesem Grund wird der Datenstrom zunächst dem entsprechenden Interpreter zur Interpretation und Auswertung zugeführt. Erst danach, bspw. wenn die Auswertung des Datenstroms in diesem Interpreter abgeschlossen ist oder zu keinem Ergebnis geführt hat, wird der Datenstrom in der ermittelten Verarbeitungsreihenfolge weiteren Interpretern zur Interpretation und Auswertung zugeführt. In dem gleichen Datenstrom werden Daten, die in einem weiteren Eingabemodus erzeugt wurden, ebenfalls in einer bestimmten Verarbeitungsreihenfolge nacheinander verschiedenen Interpretern zur Verarbeitung und Interpretation zugeführt. Die Verarbeitungsreihenfolge erfolgt also auch in Abhängigkeit des Eingabemodus der Benutzereingaben.

Die Reihenfolge, in der die Datenströme einzelner Eingabemodi nach der erwähnten Informationskategorie durchsucht werden entscheidet darüber, was primär mittels der Eingabemodi eingegeben wird. Wird diese Reihenfolge durch den Kontext der Arbeitsumgebung bestimmt, d. h. wird bspw. ausgewertet, in welcher Anwendungsumgebung sich der Benutzer bei der Eingabe gerade befindet, ergibt sich eine besonders vorteilhafte Arbeitsweise, die dem Benutzer die Steuerung der Rechnereinheit oder von Diensten, auf die er über die Rechnereinheit zugreifen kann, erleichtert.

Zusammenfassend werden die Benutzereingaben in Form von Datenströmen in einer automatisch ermittelten Verarbeitungsreihenfolge innerhalb der Informationskategorien verarbeitet. Die Verarbeitungsreihenfolge wird für jeden Datenstrom in Abhängigkeit von dem Eingabemodus, in dem die Benutzereingaben erzeugt wurden, und abhängig von dem Kontext, in dem der Datenstrom erzeugt wurde, insbesondere abhängig von der Anwendungsumgebung, in welcher der Datenstrom erzeugt wurde, ermittelt.

Gemäß einer vorteilhaften Weiterbildung der vorliegenden Erfindung wird vorgeschlagen, dass die Verarbeitungsreihenfolge in Abhängigkeit von den Eingabemodi ermittelt wird. Vorzugsweise wird die Verarbeitungsreihenfolge abhängig von den Eingabemodi, in denen die Datenströme erzeugt wurden, ermittelt.

Vorteilhafterweise wird für jeden der zu verarbeitenden Datenströme für die verschiedenen Informationskategorien eine geeignete Verarbeitungsreihenfolge innerhalb eines Datenstroms ermittelt. Vorzugsweise umfasst die Informationskategorie die Kategorien Selektieren, Eingeben und Ausführen. Es ist jedoch leicht möglich, ohne dabei die der vorliegenden Erfindung zugrunde liegende Idee zu verlassen, die Informationskategorien in mehr Kategorien, also feiner zu unterteilen.

Gemäß einer bevorzugten Ausführungsform der vorliegenden Erfindung wird vorgeschlagen, dass die Verarbeitungsreihenfolge in der aktuellen Anwendungsumgebung anhand der Verarbeitungsreihenfolge in vergangenen Anwendungsumgebungen ermittelt wird. Gemäß dieser Ausführungsform ist der Kontext, in Abhängigkeit dessen die Verarbeitungsreihenfolge festgelegt wird, zeitabhängig. Darüber hinaus wird der Kontext bei dieser Ausführungsform intern durch die Rechnereinheit vorgegeben und nicht extern durch den Benutzer oder auf andere Weise.

Alternativ wird vorgeschlagen, dass die Verarbeitungsreihenfolge in der aktuellen Anwendungsumgebung anhand benutzerindividuell vorgebbarer Einstellungen ermittelt wird. Gemäß dieser alternativen Ausführungsform kann der Benutzer also vorgeben, in welcher Verarbeitungsreihenfolge Daten eines bestimmten Eingabemodus des Datenstroms verarbeitet werden sollen. Die vorgegebenen Einstellungen werden in der Rechnereinheit oder in einer mit der Rechnereinheit in Verbindung stehenden zentralen Speichereinheit abgelegt und können bei Bedarf für die Verarbeitung der Benutzereingaben aufgerufen und entsprechend berücksichtigt werden.

Sinnvoll ist es auch, dass eine vom Benutzer vorgegebene Verarbeitungsreihenfolge abhängig von der Verarbeitungsreihenfolge in vergangenen Anwendungsumgebungen selektiert wird. Der Benutzer kann also eine oder mehrere Verarbeitungsreihenfolgen vorgeben, aus denen dann kontextabhängig automatisch eine geeignete ausgewählt wird.

Vorteilhafterweise wird in einer aktuellen Anwendungsumgebung zum Erstellen und Bearbeiten von Textdokumenten ein erster Datenstrom, der in einem Tastatur-Eingabemodus eingegeben wurde, zunächst nach alphanumerischen Sequenzen und ein zweiter Datenstrom, der in einem Sprach-Eingabemodus eingegeben wurde, zunächst nach Steuerbefehlen durchsucht.

Des Weiteren wird vorgeschlagen, dass in einer aktuellen Anwendungsumgebung zum Versenden und Empfangen von elektronischen Nachrichten ein erster Datenstrom, der in einem Tastatur-Eingabemodus eingegeben wurde, zunächst nach Steuerbefehlen und ein zweiter Datenstrom, der in einem Sprach-Eingabemodus eingegeben wurde, zunächst nach alphanumerischen Sequenzen durchsucht wird.

Als eine weitere Lösung der Aufgabe der vorliegenden Erfindung wird ausgehend von der multimodalen Benutzer-Schnittstelle der eingangs genannten Art vorgeschlagen, dass die Schnittstelle innerhalb der Datenströme verschiedene Informationskategorien unterscheidet, Mittel zum Ermitteln einer geeigneten Verarbeitungsreihenfolge der Informationskategorien innerhalb der einzelnen Datenströme abhängig von einem Kontext, in dem die Datenströme erzeugt wurden, und Mittel zum Verarbeiten der Datenströme in der ermittelten Reihenfolge aufweist, wobei der Kontext die aktuelle und/oder vergangene Anwendungsumgebungen umfasst.

Gemäß einer vorteilhaften Weiterbildung der vorliegenden Erfindung wird vorgeschlagen, dass die Mittel zum Verarbeiten der Datenströme mehrere Verarbeitungseinheiten (Interpreter) jeweils zum Verarbeiten von Daten mindestens einer bestimmten Informationskategorie umfassen. Vorteilhafterweise sind die Interpreter jeweils zum Verarbeiten von Daten einer bestimmten Informationskategorie ausgelegt. Vorteilhaft werden die Interpreter im Betriebssystem bereitgestellt und von Anwendungen genutzt.

Gemäß einer bevorzugten Ausführungsform der vorliegenden Erfindung wird vorgeschlagen, dass die Schnittstelle mindestens ein Verteilerelement aufweist, das die eingehenden Datenströme in Abhängigkeit von der ermittelten Verarbeitungsreihenfolge an die entsprechenden Mittel zum Verarbeiten der Datenströme weiterleitet. Vorteilhafterweise sind die Mittel zum Ermitteln der Verarbeitungsreihenfolge Teil des mindestens einen Verteilerelements. Vorteilhaft werden die Verteilelemente im Betriebssystem bereitgestellt und von Anwendungen genutzt.

Von besonderer Bedeutung ist die Realisierung des erfindungsgemäßen Verfahrens in der Form eines Computerprogramms, das für eine multimodale Benutzer-Schnittstelle vorgesehen ist. Dabei ist das Computerprogramm auf einem Rechengerät, insbesondere auf einem Mikroprozessor, der Schnittstelle ablauffähig und zur Ausführung des erfindungsgemäßen Verfahrens geeignet. In diesem Fall wird also die Erfindung durch ein Computerprogramm realisiert, so dass das Computerprogramm in gleicher Weise die Erfindung darstellt wie das Verfahren, zu dessen Ausführung das geeignet ist. Besonders bevorzugt ist dabei, wenn das Computerprogramm auf einem Speicherelement, insbesondere auf einem Read-Only-Memory, einem Random-Access-Memory oder auf einem Flash-Memory abgespeichert ist. Vorzugsweise stellt das Computerprogramm Teil eines Betriebssystems dar.

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung. Es zeigen:
- Figur 1: ein Blockdiagramm zur Verdeutlichung des erfindungsgemäßen Verarbeitungsverfahrens gemäß einer bevorzugten Ausführungsform;
- Figur 2: ein Ablaufdiagramm zur Verdeutlichung von Verarbeitungsreihenfolgen, in denen Benutzereingaben im Rahmen des erfindungsgemäßen Verfahrens verarbeitet werden;
- Figur 3: ein funktionaler Aufbau einer erfindungsgemäßen multimodalen Benutzer-Schnittstelle gemäß einer bevorzugten Ausführungsform; und
- Figur 4: einen schematischen Aufbau der Benutzerschnittstelle aus Fig. 3.

Die vorliegende Erfindung betrifft eine multimodale Benutzer-Schnittstelle, über welche Benutzereingaben in Form von Datenströmen verarbeitet werden können. Die Benutzereingaben dienen zur Steuerung und/oder Bedienung einer Rechnereinheit, einer auf der Rechnereinheit ablaufenden Anwendung oder eines Dienstes, der über ein Kommunikationsnetzwerk z.B. nach dem WAP-Standard mittels der Rechnereinheit ausgeführt wird. Die Rechnereinheit kann als ein herkömmlicher PC (Personal Computer), aber auch als ein stationäres oder mobiles Telekommunikationsendgerät, insbesondere nach dem GSM- oder UMTS-Standard, ausgebildet sein. Zur Eingabe der Benutzereingaben verfügt die Rechnereinheit über geeignete Eingabemittel, die bspw. als eine alphanumerische Tastatur, als eine Maus oder ein Trackball, als eine Handschriftenanalyseeinrichtung, als eine Sprachanalyseeinrichtung oder als eine Einrichtung zur Analyse und Verarbeitung von Gestik und Mimik des Benutzers ausgebildet sind. Über die Eingabemittel kann der Benutzer die Benutzereingaben somit in verschiedenen Eingabemodi eingeben.

Auf der Rechnereinheit sind verschiedene Anwendungen ablauffähig, so dass sich die Rechnereinheit je nachdem, welche Anwendungen ablaufen, in verschiedenen Anwendungsumgebungen befinden kann. Im einfachsten Fall entsprechen die verschiedenen Anwendungsumgebungen verschiedenen Anwendungsprogrammen, die auf der Rechnereinheit ablauffähig sind. So ist bspw. eine Anwendungsumgebung zum Erstellen und Bearbeiten von Textdokumenten (Textprogramm) oder eine Anwendung zum Bearbeiten, Versenden und Empfangen von elektronischen Nachrichten (e-mail-Programm) denkbar. Es ist jedoch durchaus denkbar, dass die Anwendungsumgebungen in einem feiner unterteilten Fall den einzelnen Funktionen oder Menüpunkten eines Anwendungsprogrammes entsprechen.

Die Benutzereingaben können einerseits in verschiedenen Eingabemodi eingegeben werden. Andererseits können die Benutzereingaben verschiedene Informationskategorien betreffen. Während die Eingabemodi den Ursprung der Benutzereingaben betreffen, betreffen die Informationskategorien das Ziel der Benutzereingaben, also die Frage, was mit den Benutzereingaben erzielt oder bezweckt werden soll. Informationskategorien sind bspw. Präsentieren, Selektieren und Ausführen. Beim Präsentieren werden dem Benutzer optisch, akustisch oder auf andere Weise verschiedene Dienste (Auswahlmöglichkeiten) vorgestellt. Beim Selektieren wird mindestens eine der Auswahlmöglichkeiten ausgewählt und es werden Informationen, insbesondere alphanumerische Zeichen für Texte, bspw. einen Text eines Briefes, eingegeben. Beim Ausführen wird ein bestimmter Dienst, der vorzugsweise zuvor in der Informationskategorie Selektieren ausgewählt und mit Informationen versorgt wurde, bspw. das Abspeichern eines Briefes oder das Absenden einer e-mail, gestartet und ausgeführt. Die Unterteilung der Benutzereingaben in die Informationskategorien Präsentieren, Selektieren und Ausführen ist relativ grob, deckt aber die möglichen Benutzereingaben nahezu vollständig ab. Selbstverständlich können die Informationskategorien nahezu beliebig fein unterteilt werden.

Gemäß der vorliegenden Erfindung wird eine geeignete Verarbeitungsreihenfolge der verschiedenen Informationskategorien für jeden einzelnen Datenstrom ermittelt. Die Verarbeitungsreihenfolge wird abhängig von einem Kontext, in welchem die Benutzereingaben eingegeben und die Datenströme erzeugt wurden, ermittelt. Der Kontext umfasst insbesondere die aktuelle Anwendungsumgebung, in der die Datenströme erzeugt wurden, und/oder vergangene Anwendungsumgebungen. Anschließend werden die Datenströme in der ermittelten Verarbeitungsreihenfolge verarbeitet. Die Verarbeitungsreihenfolge wird somit kontextabhängig für die Informationskategorien der Datenströme ermittelt.

Das erfindungsgemäße Verfahren hat den Vorteil, dass der Benutzer mit der Rechnereinheit multimodal kommunizieren kann, ohne dass zwischen verschiedenen Informationskategorien gewechselt werden muss. Das ist dadurch möglich, dass gemäß dem erfindungsgemäßen Verfahren - anders als beim Stand der Technik - keine strikte Trennung mehr zwischen den verschiedenen Informationskategorien der Benutzereingaben für die Verarbeitung der Datenströme erforderlich ist.

Zur Ausführung des erfindungsgemäßen Verfahrens ist eine multimodale Benutzer-Schnittstelle vorgesehen, welche mehrere Verarbeitungseinheiten (sog. Interpreter) zum Verarbeiten der Datenströme aufweist. Die eingehenden Datenströme werden in Abhängigkeit von der ermittelten Verarbeitungsreihenfolge an bestimmte Interpreter zur Verarbeitung weitergeleitet. Ein Interpreter ist für die Verarbeitung der Benutzereingaben mindestens einer bestimmten Informationskategorie zuständig. Die Benutzerschnittstelle verfügt des Weiteren über ein Verteilerelement, welches die eingehenden Datenströme in Abhängigkeit von der ermittelten Verarbeitungsreihenfolge an die entsprechenden Interpreter weiterleitet.

Ein wichtiger Aspekt der vorliegenden Erfindung ist zum einen in dem Verteilelement zu sehen, das für einen eingehenden Datenstrom kontextabhängig und in Abhängigkeit des Eingabemodus eine Verarbeitungsreihenfolge ermittelt und die Datenströme an die entsprechenden Interpreter weiterleitet. Zum anderen ist die vorliegende Erfindung in den Verarbeitungseinheiten zu sehen, die jeweils für die Verarbeitung der Datenströme einer bestimmten Informationskategorie zuständig sind. Erst dadurch wird die erfindungsgemäße flexible Verarbeitung der multimodalen Benutzereingaben ohne eine strikte Unterteilung der Benutzereingaben in verschiedene Informationskategorien möglich. Dadurch kann eine multimodale Bedienung einer Rechnereinheit oder eine multimodale Nutzung bestimmter Dienste über die Rechnereinheit entscheidend vereinfacht werden.

Die Interpreter wandeln die ihnen zugewiesenen Datenströme in an sich bekannter Weise in eine rechnerinterne einheitliche Darstellung um, damit die Rechnereinheit bzw. ein Rechengerät, insbesondere ein Mikroprozessor, der Rechnereinheit die Datenströme verarbeiten kann.

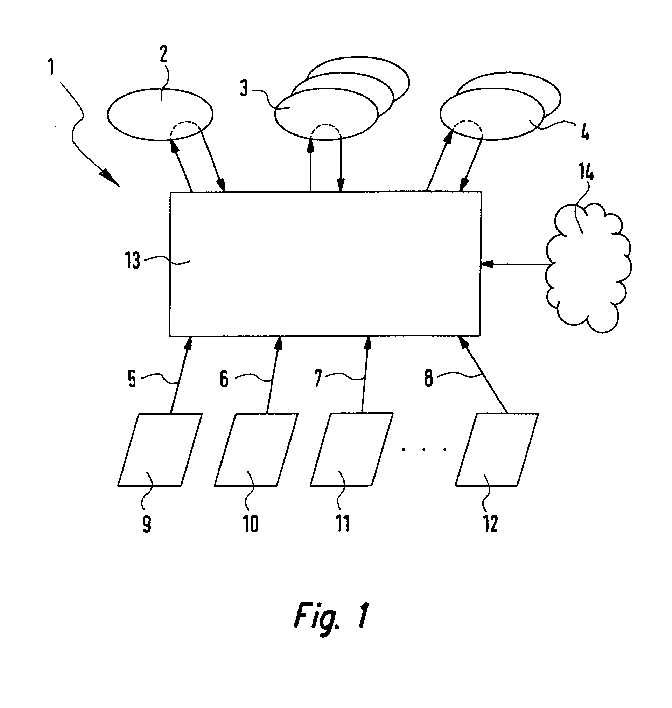

In Fig. 1 ist eine erfindungsgemäße multimodale Benutzer-Schnittstelle in ihrer Gesamtheit mit dem Bezugszeichen 1 bezeichnet. Die Schnittstelle 1 enthält mehrere parallel arbeitender Interpreter 2, 3, 4. Ein Auswahlinterpreter 2 verarbeitet den Teil der Datenströme, der zur Auswahl einer bestimmten Funktion oder eines bestimmten Menüpunktes in einem Anwendungsprogramm dient (Selektieren). Es sind drei Eingabeinterpreter 3 vorgesehen, welche diejenigen Teile der Datenströme verarbeiten, die zur Eingabe von Texten oder Ähnlichem dienen. Schließlich umfasst die Schnittstelle 1 zwei Ausführungsinterpreter, die zum Verarbeiten derjenigen Teile der Datenströme dienen, durch die bestimmte Funktionalitäten ausgelöst werden.

Benutzereingaben werden über verschiedene Eingabemitteln 9, 10, 11, 12 in eine Rechnereinheit eingegeben, wo sie in Datenströme umgewandelt und einer Verteilereinheit 13 der Schnittstelle 1 zugeführt werden. Die Eingabemittel umfassen eine Tastatur 9, ein Mikrophon 10 zur Spracheingabe, einen Stift 11 zur Benutzereingabe über einen berührungssensitiven Bildschirm und eine Vorrichtung 12 zum Erfassen und Verarbeiten der Mimik oder der Gestik eines Benutzers der Rechnereinheit. Zusätzlich kann auch eine Handschriften-Analyseeinrichtung vorgesehen sein. Somit wurden die Datenströme 5, 6, 7, 8 in verschiedenen Eingabemodi erzeugt.

In der Verteilereinheit 13 wird eine geeignete Verarbeitungsreihenfolge der Datenströme 5, 6, 7, 8 in Abhängigkeit von einem Kontext 14 ermittelt. Außerdem werden die Datenströme 5, 6, 7, 8 durch die Verteilereinheit 13 den Interpretern 2, 3, 4 in der ermittelten Verarbeitungsreihenfolge zur Verarbeitung durch die Interpreter 2, 3, 4 zugeführt. Die Interpreter 2, 3, 4 können den Datenstrom 5, 6, 7, 8 Verbrauchern zuführen oder der Verteilereinheit 13 verändert oder unverändert zurückgeben, so dass der Datenstrom 5, 6, 7, 8 weiteren Interpretern 2, 3, 4 zur Weiterverarbeitung zugeführt werden kann.

In einer aktuellen Anwendungsumgebung zum Versenden und Empfangen von elektronischen Nachrichten (Kontext "e-mail-Programm") wird der Datenstrom 6, der in dem Eingabemodus "Sprache" über das Mikrophon 10 erzeugt wird, zunächst als alphanumerische Sequenz interpretiert. Es wird also davon ausgegangen, dass die über den Datenstrom 6 eingegebenen Informationen den Text der elektronischen Nachricht darstellen. Der Datenstrom 5, der in dem Eingabemodus "Tastatur" über die Tastatur 9 erzeugt wird, wird nach Befehlen durchsucht, die in erster Linie das e-mail-Programm steuern oder die bestimmte Befehle für das Betriebssystem darstellen.

In einer anderen aktuellen Anwendungsumgebung zum Erstellen und Bearbeiten von Textdokumenten (Kontext "Textprogramm") wird ein erster Datenstrom 5, der in einem Tastatur-Eingabemodus über die Tastatur 9 eingegeben wurde, zunächst nach Steuerbefehlen durchsucht. Mit anderen Worten kann der Benutzer bei der Erstellung von elektronischen Nachrichten den Nachrichtentext bequem per Sprache diktieren und gleichzeitig mittels der Tastatur 9 Steuerbefehle eingeben. Eine Trennung von Eingabebefehlen, die per Sprache eingegeben werden, und von Steuerbefehlen, die mittels der Tastatur 9 eingegeben werden, ist erfindungsgemäß nicht erforderlich, insbesondere muss der Benutzer der Rechnereinheit nicht verschiedene Interpreter zur Verarbeitung der Eingabe- und der Steuerbefehle manuell auswählen. Bei der Erstellung von Textdokumenten kann der Benutzer den Text dagegen mittels der Tastatur 9 eingeben und sich mittels der Sprache in dem Text bewegen und/oder sprachgesteuert Formatierungsbefehle eingeben. Die gewünschte Verarbeitungsreihenfolge wird in der Verarbeitungseinheit 13 in Abhängigkeit von dem Kontext 14, in dem vorliegenden Ausführungsbeispiel anhand einer benutzerdefinierten Vorgabe von Auswahlparametern, automatisch ermittelt. Durch die Vorgabe der Parameter kann die gewünschte Verarbeitungsreihenfolge für die verschiedenen Kontexte gewährleistet werden.

Alternativ kann der Kontext auch zeitabhängig oder in Abhängigkeit von Vorgaben der Rechnereinheit, insbesondere in Abhängigkeit von vergangenen Anwendungsumgebungen, bestimmt werden. So ist bspw. die Wahrscheinlichkeit groß, dass ein Datenstrom in einer bestimmten Verarbeitungsreihenfolge verarbeitet werden soll, wenn der Datenstrom zuvor in dem gleichen oder einem ähnlichen Kontext gemäß der gleichen Reihenfolge verarbeitet worden war.

Für die eigentliche Auswertung der Datenströme, d. h. um den eigentlichen Sinn einer in den Datenströmen enthaltenen Aussage, der darin enthaltenen Befehle zu bestimmen und das darin enthaltene Wissen zu repräsentieren, sind aus dem Stand der Technik verschiedene wissenschaftliche Theorien und Modelle bekannt. Dazu gehören bspw. semantische Netzwerke, sog. Frame-Systeme, Prädikatenlogiken und Ontologien (in diesem Zusammenhang ist Ontologie die logische Theorie der Bedeutung eines bestimmten Wortes). Ein Beispiel für eine Kontextauswertung im Dialog, wo der Dialog abhängig von der gegebenen Antwort weitergeführt werden kann, ist im Internet unter http://www.lingcom.com/germany/support/examples/article/example_0003.htm veröffentlicht. Die vorliegende Erfindung betrifft jedoch weniger die Frage, wie der Inhalt der Datenströme in den Interpretern 2, 3, 4 interpretiert wird. Vielmehr betrifft die vorliegende Erfindung die Frage, wie bzw. die Interpreter 2, 3, 4 organisiert sind nach welchen Kriterien die Datenströme 5, 6, 7, 8 durch die Verteilereinheit 13 auf die Interpreter 2, 3, 4 verteilt werden.

Außer anwendungsumgebungsabhängig kann der Kontext 14 auch von der Zeit abhängig sein, d. h. er kann bspw. mittels vorgebbarer Zeitintervalle (sog. Timer) verändert werden. So kann bspw. automatisch in den Kontext "Tastatureingabe" gewechselt werden, sobald der Benutzer auf der Tastatur 9 zu tippen beginnt. Sobald der Benutzer aufhört, die Tastatur 9 zu benutzen, verharrt der Kontext 14 zunächst für eine vorgebbare Zeitdauer automatisch in dem Kontext "Tastatureingabe", bevor er nach Ablauf der Zeitdauer in den Kontext "Befehlseingabe über Sprache" wechselt.

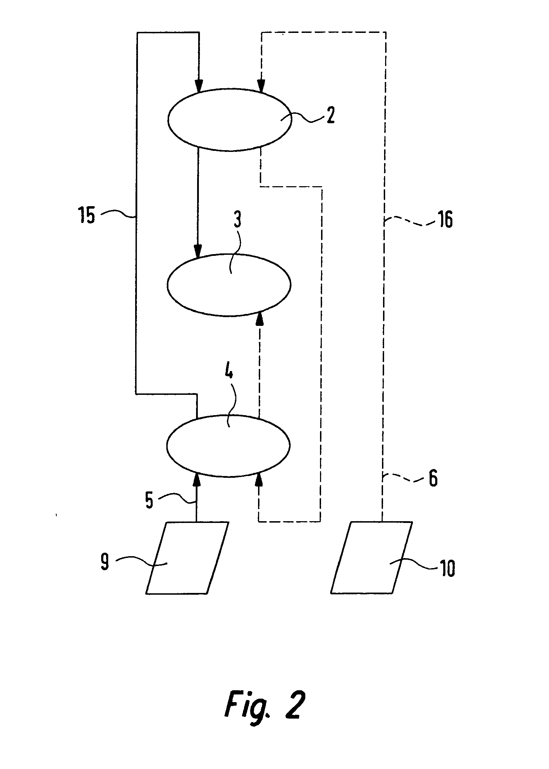

In Fig. 2 sind zwei verschiedene Verarbeitungsreihenfolgen 15 (durchgezogene Linie) und 16 (gestrichelte Linie) beispielhaft dargestellt. Der Datenstrom 5 von einer Tastatur 9 wird von der Verteilereinheit 13 zunächst dem Interpreter 4, und dann den Interpretern 2 und 3 zugeführt (Verarbeitungsreihenfolge 15). Der Datenstrom 6 von einem Mikrophon 10 wird dagegen zunächst dem Interpreter 2 und dann dem Interpreter 4 und dem Interpreter 3 zugeführt (Verarbeitungsreihenfolge 16).

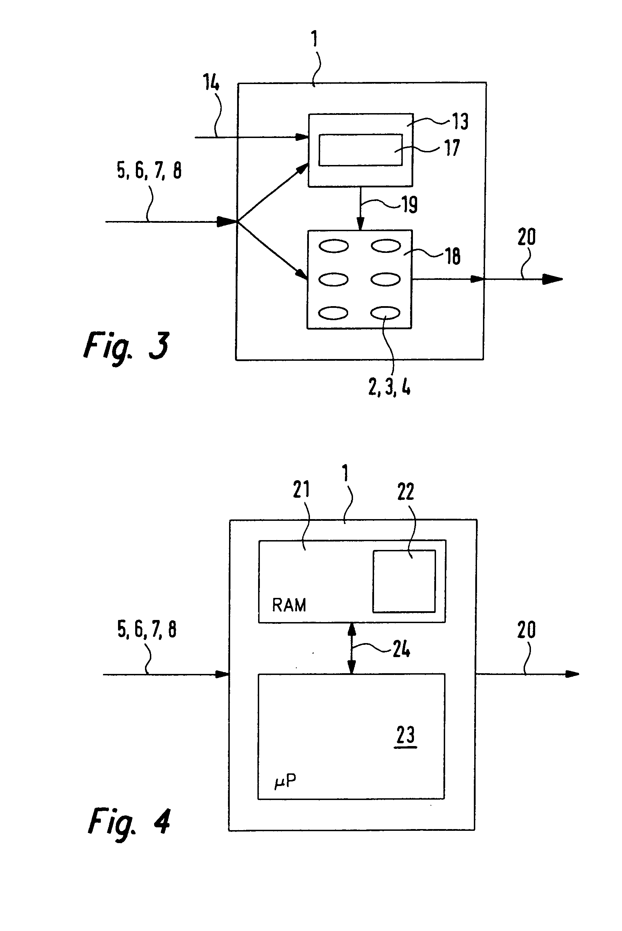

In Fig. 3 ist der funktionale Aufbau der erfindungsgemäßen multimodalen Benutzer-Schnittstelle 1 dargestellt. Der Schnittstelle 1 werden die Datenströme 5, 6, 7, 8 zugeführt. In der Schnittstelle 1 ist das Verteilerelement 13 und sind die Verarbeitungsmittel 18 zum Verarbeiten der Datenströme in der ermittelten Reihenfolge vorgesehen. Das Verteilerelement 13 umfasst Mittel 17 zum Ermitteln einer geeigneten Verarbeitungsreihenfolge. Die Verarbeitungsmittel 18 umfassen die Interpreter 2, 3, 4, die jeweils zum Verarbeiten von Daten mindestens einer bestimmten Informationskategorie vorgesehen sind. Die von den Mitteln 17 ermittelte Verarbeitungsreihenfolge 15, 16 wird an die Verarbeitungsmittel 18 weitergegeben (vgl. Pfeil 19). Nach dem Verarbeiten der Datenströme 5, 6, 7, 8 in den Verarbeitungsmitteln 18 werden die entsprechenden Befehle bzw. Eingabeinformationen an die Rechnereinheit übermittelt (Pfeil 20).

In Fig. 4 ist der strukturelle Aufbau der erfindungsgemäßen multimodalen Benutzer-Schnittstelle 1 dargestellt. Die Schnittstelle 1 umfasst ein Speicherelement 21, das als ein Flash-Memory ausgebildet ist. In dem Speicherelement 21 ist ein Computerprogramm 22 abgespeichert, das auf einem Rechengerät 23 der Schnittstelle 1, das insbesondere als ein Mikroprozessor ausgebildet ist, ablauffähig und zur Ausführung des erfindungsgemäßen Verfahrens geeignet ist. Zur Ausführung des Computerprogramms 22 wird dieses über eine Datenverbindung 24 entweder als Ganzes oder abschnittsweise an den Mikroprozessor 23 übertragen. In entgegengesetzter Richtung können im Rahmen der Abarbeitung des Computerprogramms 22 in dem Mikroprozessor 23 gewonnene Ergebnisse oder andere Daten über die Datenverbindung 24 an das Speicherelement 21 übermittelt und dort abgespeichert werden. Sowohl das Speicherelement 21 als auch der Mikroprozessor 23 können als gesonderte Bauteile in der Schnittstelle 1 vorgesehen sein. Es ist allerdings auch möglich, dass das Speicherelement 21 und der Mikroprozessor 23 Teil der Rechnereinheit sind, der die Benutzer-Schnittstelle 1 zugeordnet ist.

## Patentansprüche

1. Verfahren zum Verarbeiten von multimodalen Benutzereingaben, die über verschiedene Eingabemittel (9, 10, 11, 12) in verschiedenen Eingabemodi innerhalb einer bestimmten von mehreren verschiedenen Anwendungsumgebungen in eine Rechnereinheit eingegeben und dort in unterschiedliche Datenströme (5, 6, 7, 8) umgewandelt werden, **dadurch gekennzeichnet, dass** innerhalb der Datenströme (5, 6, 7, 8) verschiedene Informationskategorien unterschieden werden, eine geeignete Verarbeitungsreihenfolge der Informationskategorien innerhalb der einzelnen Datenströme (5, 6, 7, 8) abhängig von einem Kontext (14) ermittelt wird und die Datenströme (5, 6, 7, 8) in der ermittelten Reihenfolge verarbeitet werden, wobei der Kontext (14) die aktuelle und/oder vergangene Anwendungsumgebungen umfasst.

2. Verfahren nach Anspruch 1, **dadurch gekennzeichnet, dass** die Verarbeitungsreihenfolge in Abhängigkeit von den Eingabemodi (9, 10, 11, 12) ermittelt wird.

3. Verfahren nach Anspruch 1 oder 2, **dadurch gekennzeichnet, dass** für jeden der zu verarbeitenden Datenströme (5, 6, 7, 8) für die verschiedenen Informationskategorien eine geeignete Verarbeitungsreihenfolge innerhalb eines Datenstroms (5, 6, 7, 8) ermittelt wird.

4. Verfahren nach einem der Ansprüche 1 bis 3, **dadurch gekennzeichnet, dass** die Verarbeitungsreihenfolge in der aktuellen Anwendungsumgebung anhand der Verarbeitungsreihenfolge in vergangen Anwendungsumgebungen ermittelt wird.

5. Verfahren nach einem der Ansprüche 1 bis 4, **dadurch gekennzeichnet, dass** die Verarbeitungsreihenfolge in der aktuellen Anwendungsumgebung anhand benutzerindividuell vorgebbarer Einstellungen ermittelt wird.

6. Verfahren nach einem der Ansprüche 1 bis 5, **dadurch gekennzeichnet, dass** in einer aktuellen Anwendungsumgebung zum Erstellen und Bearbeiten von Textdokumenten ein erster Datenstrom (5), der in einem Tastatur-Eingabemodus (9) eingegeben wurde, zunächst nach alphanumerischen Sequenzen und ein zweiter Datenstrom (6), der in einem Sprach-Eingabemodus (10) eingegeben wurde, zunächst nach Steuerbefehlen durchsucht wird.

7. Verfahren nach einem der Ansprüche 1 bis 4, **dadurch gekennzeichnet, dass** in einer aktuellen Anwendungsumgebung zum Versenden und Empfangen von elektronischen Nachrichten ein erster Datenstrom (5), der in einem Tastatur-Eingabemodus (9) eingegeben wurde, zunächst nach Steuerbefehlen und ein zweiter Datenstrom (6), der in einem Sprach-Eingabemodus (10) eingegeben wurde, zunächst nach alphanumerischen Sequenzen durchsucht wird.

8. Multimodale Benutzer-Schnittstelle (1), welche multimodale Benutzereingaben verarbeitet, die über verschiedene Eingabemittel (9, 10, 11, 12) in verschiedenen Eingabemodi (9, 10, 11, 12) innerhalb einer bestimmten von mehreren verschiedenen Anwendungsumgebungen in eine Rechnereinheit eingebbar und dort in unterschiedliche Datenströme (5, 6, 7, 8) umwandelbar sind, **dadurch gekennzeichnet, dass** die Schnittstelle (1) innerhalb der Datenströme (5, 6, 7, 8) verschiedene Informationskategorien unterscheidet, Mittel (17) zum Ermitteln einer geeigneten Verarbeitungsreihenfolge der Informationskategorien innerhalb der einzelnen Datenströme (5, 6, 7, 8) abhängig von einem Kontext (14) und Mittel (18) zum Verarbeiten der Datenströme (5, 6, 7, 8) in der ermittelten Reihenfolge aufweist, wobei der Kontext (14) die aktuelle und/oder vergangene Anwendungsumgebungen umfasst.

9. Schnittstelle (1) nach Anspruch 8,**dadurch gekennzeichnet, dass** die Mittel (18) zum Verarbeiten der Datenströme (5, 6, 7, 8) mehrere Verarbeitungseinheiten (Interpreter) (2, 3, 4) jeweils zum Verarbeiten von Daten mindestens einer bestimmten Informationskategorie umfassen.

10. Schnittstelle (1) nach Anspruch 9, **dadurch gekennzeichnet, dass** die Interpreter (2, 3, 4) jeweils zum Verarbeiten von Daten einer bestimmten Informationskategorie ausgelegt sind.

11. Schnittstelle (1) nach einem der Ansprüche 8 bis 10, **dadurch gekennzeichnet, dass** die Schnittstelle (1) mindestens ein Verteilerelement (13) aufweist, das die eingehenden Datenströme (5, 6, 7, 8) in Abhängigkeit von der ermittelten Verarbeitungsreihenfolge (19) an die entsprechenden Mittel (18) zum Verarbeiten der Datenströme (5, 6, 7, 8) weiterleitet.

12. Schnittstelle (1) nach Anspruch 11, **dadurch gekennzeichnet, dass** die Mittel (17) zum Ermitteln der Verarbeitungsreihenfolge Teil des mindestens einen Verteilerelements (13) sind.

13. Computerprogramm (22) für eine multimodale Benutzer-Schnittstelle (1), das auf einem Rechengerät (23), insbesondere auf einem Mikroprozessor, der Schnittstelle (1) ablauffähig ist, **dadurch gekennzeichnet, dass** das Computerprogramm (22) zur Ausführung eines Verfahrens nach einem der Ansprüche 1 bis 7 geeignet ist, wenn es auf dem Rechengerät (23) abläuft.

14. Computerprogramm (22) nach Anspruch 12, **dadurch gekennzeichnet, dass** das Computerprogramm (22) auf einem Speicherelement (21), insbesondere auf einem Read-Only-Memory, einem Random-Access-Memory oder auf einem Flash-Memory, abgespeichert ist.
